# EUROPEAN PATENT APPLICATION

(11) **EP 4 707 960 A1**
(43) Date of publication of application: **11.03.2026**
(21) Application number: 24843368.2
(22) Date of filing: 02.07.2024
(51) Int. Cl.: G04G 17/04, G04G 17/08

(54) **WEARABLE ELECTRONIC DEVICE**

(30) Priority: 18.07.2023 KR 20230092955; 20.07.2023 KR 20230094752
(71) Applicant: Samsung Electronics Co., Ltd., Suwon-si, Gyeonggi-do 16677 (KR)
(72) Inventor: JEONG, Youngtae, Suwon-si Gyeonggi-do 16677 (KR); RYU, Jaejong, Suwon-si Gyeonggi-do 16677 (KR); SHIN, Hyohoon, Suwon-si Gyeonggi-do 16677 (KR); SIM, Jaeyong, Suwon-si Gyeonggi-do 16677 (KR); JANG, Dongheon, Suwon-si Gyeonggi-do 16677 (KR); JIN, Chulwoo, Suwon-si Gyeonggi-do 16677 (KR)
(74) Representative: Gulde & Partner
(86) International application number: PCT/KR2024/009269
(87) International publication number: WO 2025/018648

(57) **Abstract**

The present disclosure relates to a wearable electronic device. A wearable electronic device according to an embodiment of the present disclosure may include: an outer circumferential wall forming a space inside; a support member disposed inside the outer circumferential wall; a window arranged on the upper side of the support member to be spaced apart from the support member; a display disposed between the support member and the window and spaced apart from the outer circumferential wall; and a support body including a first portion positioned between the display and the outer circumferential wall and a second portion positioned between the display and the support member and extending from the first portion.

## Description

### [Technical Field]

Various embodiments of the disclosure relate to a wearable electronic device, e.g., a wearable electronic device including a support.

### [Background Art]

Electronic device may typically mean a device performing a designated function according to its equipped program, such as a home appliance, an electronic scheduler, a portable multimedia player, a mobile communication terminal, a tablet PC, a video/sound device, a desktop PC or laptop computer, a navigation for automobile, etc. As electronic devices are highly integrated, and high-speed, high-volume wireless communication becomes commonplace, a small electronic device, such as a mobile communication terminal, may be equipped with various functions. For example, an electronic device comes with the integrated functionality, including an entertainment function, such as playing video games, a multimedia function, such as replaying music/videos, a communication and security function for mobile banking, and a scheduling and e-wallet function.

Recently, wearable electronic devices that may be worn on the human body are commercially available, and mobile communication terminals and wearable electronic devices are being routinely utilized. A wearable electronic device may remain in contact with the user's body for a long time and may thus be useful for medical or healthcare purposes. For example, according to equipped sensors, an electronic device may detect the user's biometric information, such as photoplethysmograph (PPG), sleep interval, skin temperature, heart rate or electrocardiogram. The detected biometric information may be stored in the electronic device or transmitted to a medical institution in real time to be utilized for healthcare of the user. In general, an electronic device has a bar shape, a box shape, or a flat plate shape, but a wearable electronic device may be composed of multiple segments considering wearing convenience and the user's body curves. For example, a wrist-type wearable electronic device may include a housing, which serves as a main body to receive various circuit devices, and at least one wearing member, and a face-worn electronic device may include lenses corresponding to the user's eyes and at least one temple.

The above-described information may be provided as background for the purpose of helping understanding of the disclosure. No claim or determination is made as to whether any of the foregoing is applicable as background art in relation to the disclosure.

### [Disclosure of Invention]

### [Solution to Problems]

A wearable electronic device according to an embodiment of the disclosure may comprise an outer circumferential wall forming an inner space; a supporting member disposed inside the outer circumferential wall; a window disposed to be spaced apart from an upper side of the supporting member; a display disposed between the supporting member and the window and spaced apart from the outer circumferential wall; and a support including a first portion positioned between the display and the outer circumferential wall and a second portion positioned between the display and the supporting member and extending from the first portion.

A wearable electronic device according to an embodiment of the disclosure may comprise a display configured to output a screen; an outer circumferential wall spaced apart from the display and surrounding the display; a supporting member spaced apart in a direction crossing a direction in which the display and the outer circumferential wall are spaced apart; and a support including a first portion positioned between the display and the outer circumferential wall and a second portion positioned between the display and the supporting member.

### [Brief Description of Drawings]

FIG. 1 is a block diagram illustrating an electronic device in a network environment according to an embodiment;
FIG. 2 is a front perspective view illustrating a wearable electronic device according to an embodiment of the disclosure;
FIG. 3 is a rear perspective view illustrating the wearable electronic device of FIG. 1 according to an embodiment of the disclosure;
FIG. 4 is an exploded perspective view illustrating the wearable electronic device of FIG. 1 according to an embodiment of the disclosure;
FIG. 5 is a perspective view illustrating a display assembly according to an embodiment of the disclosure;
FIG. 6 is an exploded view illustrating a display assembly according to an embodiment of the disclosure;
FIG. 7 is a rear view illustrating a display assembly according to an embodiment of the disclosure;
FIG. 8A is a cross-sectional view taken along A-A' of FIG. 2;
FIG. 8B is a cross-sectional view taken along B-B' of FIG. 2;
FIG. 8C is a cross-sectional view taken along C-C' and D-D' of FIG. 2;
FIG. 9 is an enlarged view illustrating area M of FIG. 7;
FIG. 10 illustrates a portion of a display assembly according to an embodiment of the disclosure;
FIG. 11 illustrates a portion of the cross-sectional view taken along A-A' of FIG. 2;
FIG. 12 is a view illustrating a method for manufacturing a display assembly according to an embodiment of the disclosure;
FIG. 13 is a view illustrating a method for manufacturing a display assembly according to an embodiment of the disclosure;
FIG. 14 is a view illustrating a method for manufacturing a display assembly according to an embodiment of the disclosure;
FIG. 15 is a view illustrating a method for manufacturing a display assembly according to an embodiment of the disclosure; and
FIG. 16 is a view illustrating a method for manufacturing a display assembly according to an embodiment of the disclosure.

### [Mode for the Invention]

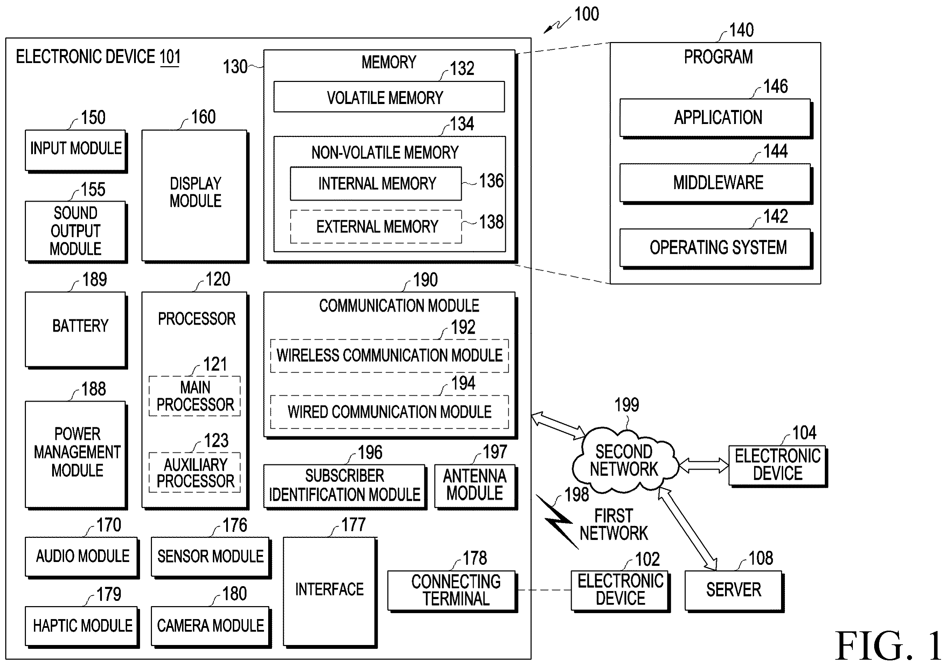

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

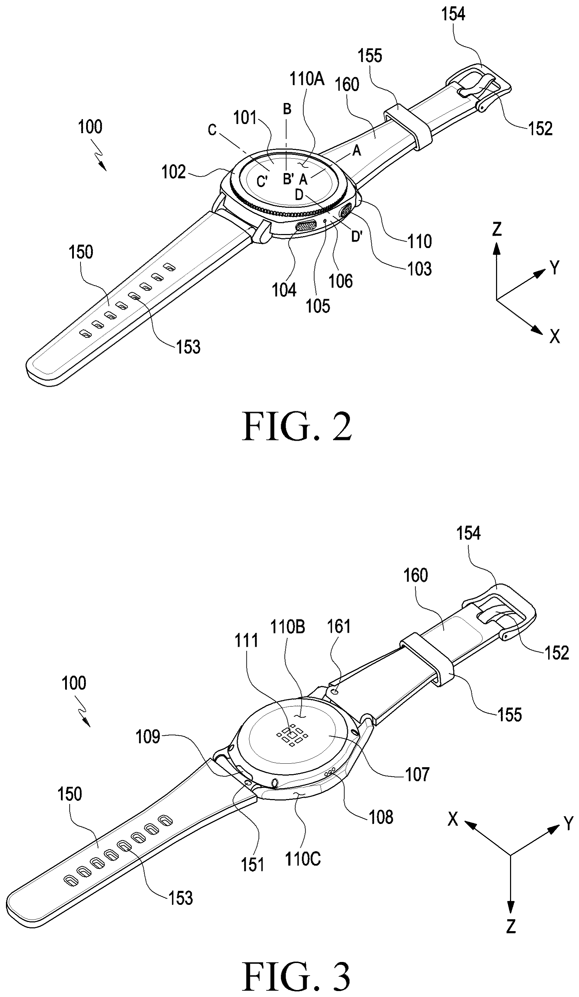

FIG. 2 is a front perspective view illustrating a wearable electronic device 100 according to an embodiment of the disclosure. FIG. 3 is a rear perspective view illustrating the wearable electronic device 100 of FIG. 2 according to an embodiment of the disclosure.

In the following detailed description, in the orthogonal coordinate system of FIGS. 2 to 4, 'X-axis direction' may be understood as the width direction of the electronic device 100 or the housing 110, 'Y-axis direction' may be understood as the length direction of the electronic device 100 or the housing 110, and 'Z-axis direction' may be understood as the thickness direction of the electronic device 100 or the housing 110. In an embodiment, the direction in which the front surface (e.g., the first surface 110A of FIG. 2) of the electronic device 100 or the housing 110 faces may be defined as a 'first direction' or a '+Z direction', and the direction in which the rear surface (e.g., the second surface 110B of FIG. 3) of the electronic device 100 or the housing 110 faces may be defined as a 'second direction' or a '-Z direction'.

Referring to FIGS. 2 and 3, according to an embodiment, a wearable electronic device 100 may include a housing 110 including a first surface (or front surface) 110A, a second surface (or rear surface) 110B, and a side surface 110C surrounding the space between the first surface 110A and the second surface 110B and wearing members 150 and 160 connected to at least part of the housing 110 and configured to allow the electronic device 100 to be removably worn on the user's body portion (e.g., the user's wrist or ankle). For example, the wearable electronic device 100 may be of a wrist watch type. According to an embodiment (not shown), the housing may denote a structure forming the first surface 110A of FIG. 2, the second surface 110B of FIG. 3, and some of the side surfaces 110C. According to an embodiment, at least part of the first surface 110A may have a substantially transparent front plate 101 (e.g., a glass plate or polymer plate including various coat layers). The second surface 110B may be formed of a substantially opaque rear plate 107. According to an embodiment, when the electronic device may include a sensor module 111 disposed on the second surface 110B, the rear plate 107 may at least partially include a transparent area. The rear plate 107 may be formed of, e.g., laminated or colored glass, ceramic, polymer, metal (e.g., aluminum, stainless steel (STS), or magnesium), or a combination of at least two thereof. The side surface 110C may be formed by a side bezel structure (or a "side member") 106 that couples to the front plate 101 and the rear plate 107 and includes a metal and/or polymer. According to an embodiment, the rear plate 107 and the side bezel plate 106 may be integrally formed together and include the same material (e.g., a metal, such as aluminum). The wearing members 150 and 160 may be formed of various materials in various shapes. A uni-body structure or multiple unit links which is flexible may be formed of fabric, leather, rubber, urethane, metal, ceramic, or a combination of at least two thereof.

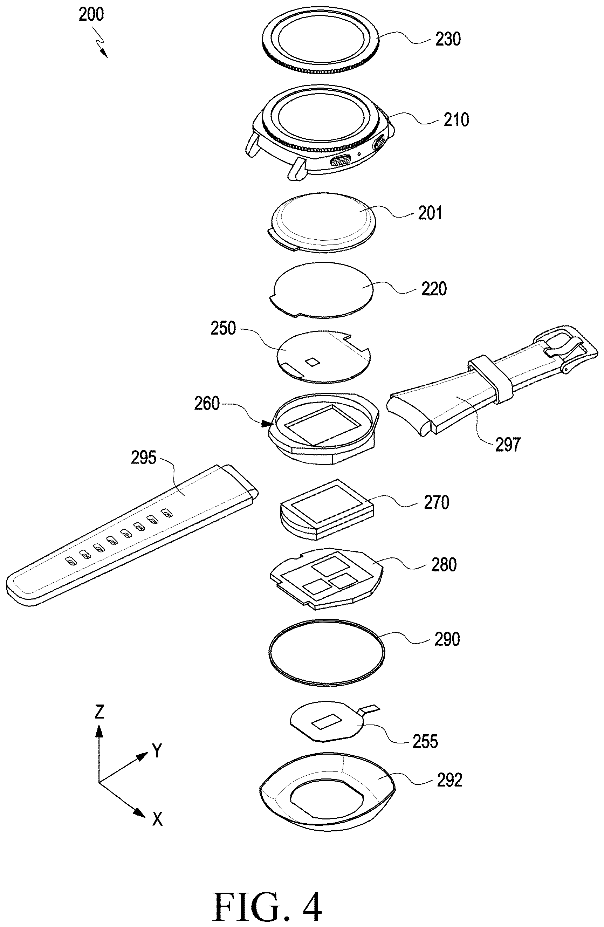

According to an embodiment, the electronic device 100 may include at least one or more of a display 220 (refer to FIG. 4), audio modules 105 and 108, a sensor module 111, key input devices 102, 103, and 104, and a connector hole 109. According to an embodiment, the electronic device 100 may exclude at least one (e.g., the key input devices 102, 103, and 104, connector hole 109, or sensor module 111) of the components or may add other components.

The display (e.g., the display 220 of FIG. 4) may be exposed through a significant portion of the front plate 101. The display 220 may have a shape corresponding to the shape of the front plate 101, e.g., a circle, ellipse, or polygon. The display 220 may be coupled with, or disposed adjacent, a touch detection circuit, a pressure sensor capable of measuring the strength (pressure) of touches, and/or fingerprint sensor.

The audio modules 105 and 108 may include a microphone hole 105 and a speaker hole 108. A microphone for acquiring external sounds may be disposed in the microphone hole 105. In an embodiment, a plurality of microphones may be disposed to detect the direction of the sound. The speaker hole 108 may be used for an external speaker or a receiver for phone talks. According to an embodiment, a speaker may be included without the speaker hole (e.g., a piezo speaker).

The sensor module 111 may produce an electrical signal or data value corresponding to the internal operation state or external environment state of the electronic device 100. The sensor module 111 may include, e.g., a biometric sensor module 111 (e.g., a heartrate monitor (HRM) sensor) disposed on the second surface 110B of the housing 110. The electronic device 100 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 102, 103, and 104 may include a wheel key 102 disposed on the first surface 110A of the housing 110 to be rotatable in at least one direction and/or key buttons 103 and 104 disposed on the side surface 110C of the housing 110. The wheel key 102 may have a shape corresponding to the shape of the front plate 101. According to an embodiment, the electronic device 100 may exclude all or some of the above-mentioned key input devices 102, 103, and 104 and the excluded key input devices 102, 103, and 104 may be implemented in other forms, e.g., as soft keys on the display 220. The connector hole 109 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 100 may further include a connector cover (not shown) to cover at least part of, e.g., the connector hole 109 and preventing undesirable materials from entering the connector hole.

The wearing members 150 and 160 may detachably be fastened to at least portions of the housing 110 via locking members 151 and 161. The locking members 151 and 161 may include components or parts for coupling, such as pogo pins, and, according to an embodiment, may be replaced with protrusions or recesses formed on/in the wearing members 150 and 160. For example, the wearing members 150 and 160 may be coupled in such a manner as to be fitted into or over the recesses or protrusions formed on the housing 110. The wearing members 150 and 160 may include one or more of a fastening member 152, fastening member coupling holes 153, a band guide member 154, and a band fastening ring 155.

The fastening member 152 may be configured to allow the housing 110 and the wearing members 150 and 160 to be fastened to the user's body portion (e.g., wrist or ankle). The fastening member coupling holes 153 may fasten the housing 110 and the wearing members 150 and 160 to the user's body portion, corresponding to the fastening member 152. The band guide member 154 may be configured to restrict movement of the fastening member 152 to a certain range when the fastening member 152 fits into one of the fastening member coupling holes 153, thereby allowing the wearing members 150 and 160 to be tightly fastened onto the user's body portion. The band fastening ring 155 may limit the range of movement of the wearing members 150 and 160, with the fastening member 152 fitted into one of the fastening member coupling holes 153.

FIG. 4 is an exploded perspective view illustrating the wearable electronic device of FIG. 2 according to an embodiment of the disclosure.

Referring to FIG. 4, a wearable electronic device 200 may include a side bezel structure 210, a wheel key 230, a front plate 201 (e.g., the front plate 101 of FIG. 2), a display 220, a first antenna 250, a second antenna (e.g., the antenna included in the second circuit board 255), a supporting member 260 (e.g., a bracket), a battery 270, a printed circuit board 280, a sealing member 290, a rear plate 292, and wearing members 295 and 297 (e.g., the wearing members 150 and 160 of FIG. 2 or 3). At least one of the components of the electronic device 200 may be the same or similar to at least one of the components of the electronic device 100 of FIG. 2 or 3 and no duplicate description is made below. The supporting member 260 may be disposed inside the electronic device 200 to be connected with the side bezel structure 210 or integrated with the side bezel structure 210. The supporting member 260 may be formed of, e.g., a metal and/or non-metallic material (e.g., polymer). The display 220 may be joined onto one surface of the supporting member 260, and the printed circuit board 280 may be joined onto the opposite surface of the supporting member 274. A processor, memory, and/or interface may be mounted on the printed circuit board 280. The processor may include one or more of, e.g., a central processing unit, an application processor, a graphic processing unit (GPU), a sensor processor, or a communication processor.

The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 200 with an external electronic device and may include a USB connector, an SD card/multimedia card (MMC) connector, or an audio connector.

The battery 270 may be a device for supplying power to at least one component of the electronic device 200. The battery 277 may include, e.g., a primary cell which is not rechargeable, a secondary cell which is rechargeable, or a fuel cell. At least a portion of the battery 270 may be disposed on substantially the same plane as the printed circuit board 280. The battery 270 may be integrally or detachably disposed inside the electronic device 200.

The first antenna 250 may be disposed between the display 220 and the supporting member 260. The first antenna 250 may include, e.g., a near-field communication (NFC) antenna, a wireless charging antenna, and/or a magnetic secure transmission (MST) antenna. The first antenna 250 may perform short-range communication with an external device, wirelessly transmit/receive power necessary for charging, or transmit magnetic-based signals including payment data or short-range communication signals. In an embodiment, an antenna structure may be formed by a portion or combination of the side bezel structure 210 and/or the supporting member 260.

The second circuit board 255 may be disposed between the circuit board 280 and the rear plate 293. The second circuit board 255 may include an antenna, e.g., a near-field communication (NFC) antenna, a wireless charging antenna, and/or a magnetic secure transmission (MST) antenna. For example, the second circuit board 255 may perform short-range communication with an external device, wirelessly transmit/receive power necessary for charging, or transmit magnetic-based signals including payment data or short-range communication signals. According to an embodiment, an antenna structure may be formed of a portion or combination of the side bezel structure 210 and/or the rear plate 293. According to various embodiments, when the electronic device 200 (e.g., the electronic device 100 of FIGS. 2 and 3) includes a sensor module (e.g., the sensor module 111 of FIG. 3), the sensor circuit disposed on the second circuit board 255 or a sensor element (e.g., a photoelectric conversion element or an electrode pad) separate from the second circuit board 255 may be disposed. For example, an electronic component provided as the sensor module 111 may be disposed between the circuit board 280 and the rear plate 293.

The sealing member 290 may be positioned between the side bezel structure 210 and the rear plate 293. The sealing member 290 may be configured to block moisture or foreign bodies that may enter the space surrounded by the side bezel structure 210 and the rear plate 293, from the outside.

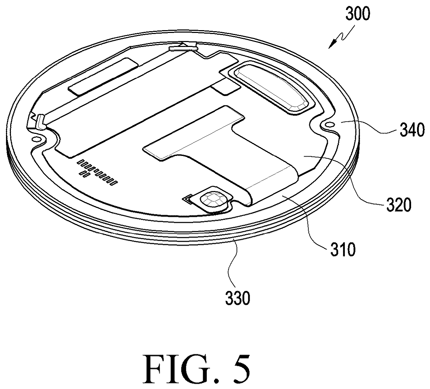

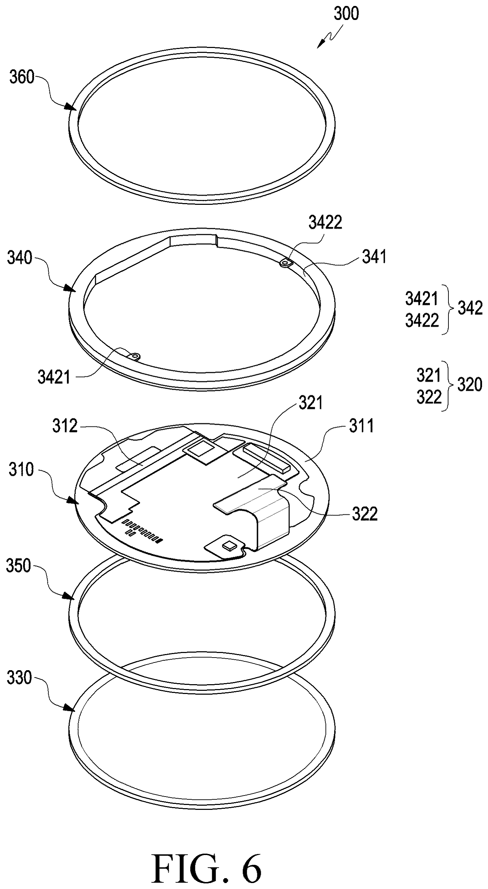

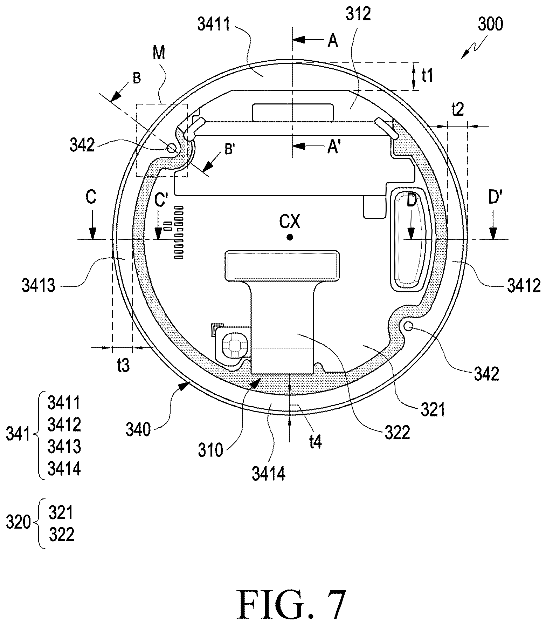

FIG. 5 is a perspective view illustrating a portion of a display assembly 300 according to an embodiment of the disclosure. FIG. 6 is an exploded perspective view illustrating a display assembly 300 according to an embodiment of the disclosure. The components described with reference to FIGS. 5 and 6 may be identical in whole or part to the components described with reference to FIGS. 1 to 4. The components described with reference to FIGS. 5 and 6 may be identical in whole or part to the components described with reference to FIGS. 7 to 16.

According to an embodiment, an electronic device (e.g., the electronic device 200 of FIG. 4) may include a display assembly 300. The display assembly 300 may be an assembly of some components (e.g., the display 310, the substrate 320, the window 330, the support 340, the outer circumferential wall 350, and the supporting member 360 of FIGS. 5 and 6) of the electronic device (e.g., the electronic device 200 of FIG. 4).

According to an embodiment, the display assembly 300 may include a display 310. The display 310 may output a screen displayed outside the electronic device (e.g., the electronic device 200 of FIG. 4). The display 310 may be the same as the display 220 illustrated in FIG. 4.

According to an embodiment, the display 310 may include a panel 311 and a bending portion 312. The panel 311 may be disk-shaped. The bending unit 312 may connect the panel 311 and the circuit board 320. The bending portion 312 may be bent and extended from the panel 311. The bending portion 312 may include a flexible material. The bending portion 312 may include chips on plastic (COP).

According to an embodiment, the display assembly 300 may include a circuit board 320. The circuit board 320 may be electrically connected to the display 310. At least a portion of the circuit board 320 may include a flexible material. The circuit board 320 may be a flexible circuit board.

According to an embodiment, the circuit board 320 may include a substrate plate 321 and a substrate bending portion 322. The substrate plate 321 may be connected to the display 310. The substrate plate 321 may be disposed on the rear surface of the display 310. The substrate plate 321 may be connected to the bending portion 312. The substrate bending portion 322 may be bent and extended from the substrate plate 321. The substrate bending unit 322 may be connected to a battery (e.g., the battery 270 of FIG. 4).

According to an embodiment, the display assembly 300 may include a window 330. The window 330 may include a transparent material. The screen output from the display 310 may be exposed to the outside of the electronic device (e.g., the electronic device 200 of FIG. 4) through the window 330. The window 330 may be the same as the front plate 201 illustrated in FIG. 4.

According to an embodiment, the display assembly 300 may include a support 340. The support 340 may extend along the circumference of the display 310. The support 340 may be spaced apart from the circuit board 320. The support 340 may be coupled to the display 310. The support 340 may be referred to as an "injection-molded article". The support 340 may be referred to as a "cushioning member". The support 340 may be manufactured by molding a resin material.

According to an embodiment, the support 340 may include a body portion 341 and an injection portion 342. The body portion 341 may be annular. The body portion 341 may extend along the circumference of the display 310. The body portion 341 may be disposed between the display 310 and the supporting member 360. The injection portion 342 may protrude radially inward of the body portion 341. The injection portion 342 may include a first injection portion 3421 and a second injection portion 3422 spaced apart from each other in the circumferential direction of the body portion 341.

According to an embodiment, the display assembly 300 may include an outer circumferential wall 350. The outer circumferential wall 350 may extend in a circumferential direction of the display 310. The outer circumferential wall 350 may surround the display 310. The outer circumferential wall 350 may form at least a portion of the surface of the electronic device (e.g., the electronic device 200 of FIG. 4). The outer circumferential wall 350 may be referred to as a "deco".

According to an embodiment, the display assembly 300 may include a supporting member 360. The supporting member 360 may support the display 310. The support 340 may be disposed between the display 310 and the supporting member 360. The supporting member 360 may be the same as the supporting member 260 illustrated in FIG. 4.

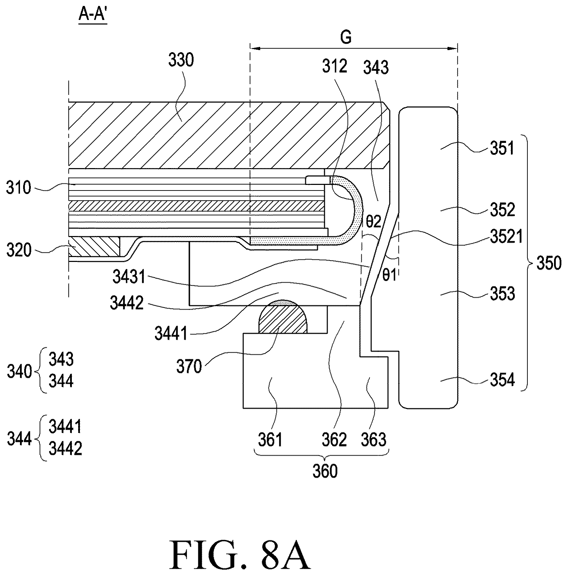

FIG. 7 is a view in which a portion of the display assembly 300 is assembled and viewed from one surface. Some or all of the components described with reference to FIG. 7 may be the same as those described with reference to FIGS. 1 to 6. Some or all of the components described with reference to FIG. 7 may be the same as those described with reference to FIGS. 8A to 16.

According to an embodiment, the display assembly 300 may have a disk shape. The display assembly 300 may have a central axis CX. The support 340 may be radially spaced apart from the display 310 with respect to the central axis CX.

According to an embodiment, the support 340 may include a body portion 341 and an injection portion 342. The body portion 341 may surround the display 310 and the circuit board 320. The injection portion 342 may protrude from the body portion 341 toward the display 310. A plurality of injection portions 342 may be disposed to be spaced apart from each other in the circumferential direction of the body portion 341.

According to an embodiment, the body portion 341 may include a first body portion 3411. The first body portion 3411 may be a portion of the body portion 341. The first body portion 3411 may support the bending portion 312 of the display 310. The body portion 341 may include a second body portion 3412. The second body portion 3412 may be a portion of the body portion 341. The second body portion 3412 may support one side of the display 310. The body portion 341 may include a third body portion 3413. The third body portion 3413 may be a portion of the body portion 341. The third body portion 3413 may support one side of the display 310. The body portion 341 may include a fourth body portion 3414. The fourth body portion 3414 may be a portion of the body portion 341. The fourth body portion 3414 may support one side of the display 310. The second body portion 3412 and the third body portion 3413 may be disposed at positions opposite to each other with respect to the display 310. The fourth body portion 3414 may be disposed at a position opposite to the first body portion 3411 with respect to the display 310. The thickness t1 of the first body portion 3411 may be larger than the thicknesses t2, t3, and t4 of the second, third, and fourth body portions 3412, 3413, and 3414. The thickness t2 of the second body portion 3412 may be larger than the thickness t3 of the third body portion 3413.

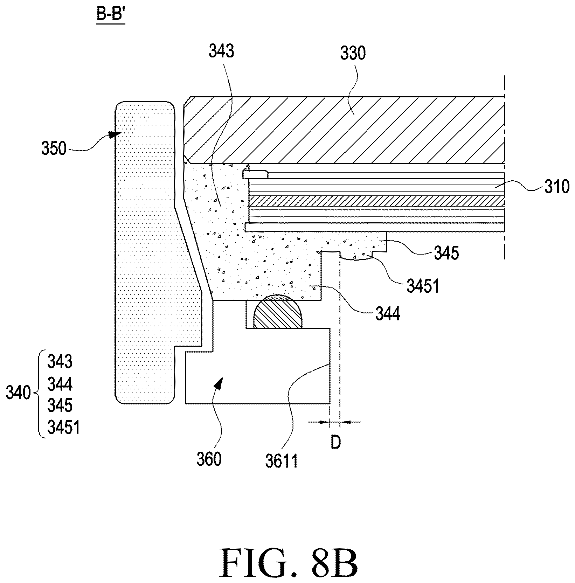

FIG. 8A is a cross-sectional view of the display assembly 300 taken along line A-A' illustrated in FIGS. 2 and 7. Some or all of the components described with reference to FIG. 8A may be the same as those described with reference to FIGS. 1 to 7. Some or all of the components described with reference to FIG. 8A may be the same as those described with reference to FIGS. 8B to 16.

According to an embodiment, the support 340 may support the display 310. The support 340 may support the circuit board 320. At least a portion of the support 340 may be disposed between the display 310 and the outer circumferential wall 350. At least a portion of the support 340 may be disposed between the display 310 and the supporting member 360. At least a portion of the support 340 may be disposed between the window 330 and the supporting member 360. The support 340 may surround the bending portion 312. The support 340 may support the bending portion 312. The display assembly 300 according to an embodiment of the disclosure may have a gap G from the display 310 to the outer surface of the outer circumferential wall 350. The gap G of the display assembly 300 according to an embodiment of the disclosure may be smaller than that of the display assembly according to a comparative embodiment by moving the supporting member 360 to a lower side of the display 310 and disposing the support 340 between the display 310 and the outer circumferential wall 350.

According to an embodiment, the support 340 may include a first portion 343 disposed between the display 310 and the outer circumferential wall 350. The first portion 343 may surround the bending portion 312 and may support the bending portion 312. The first portion 343 may include an outer surface 3431. The outer surface 3431 may extend to be inclined from a vertical direction.

According to an embodiment, the support 340 may include a second portion 344 disposed between the display 310 and the supporting member 360. The second portion 344 may be seated on the supporting member 360, and the display 310 may be seated on the second portion 344. The second portion 344 may include a 2-1th portion 3441 coupled to the adhesive member 370. The second portion 344 may include a 2-2th portion 3442 connected to the supporting wall 362. The 2-1th portion 3441 may be positioned farther from the outer circumferential wall 350 than the 2-2th portion 3442.

According to an embodiment, the first portion 343 and the second portion 344 may be integrated. The first portion 343 and the second portion 344 may be structures molded by injection molding of a resin material.

According to an embodiment, the outer circumferential wall 350 may be disposed to surround the display 310, the window 330, and the supporting member 360. The outer circumferential wall 350 may form the outer surface of the electronic device (e.g., the electronic device 200 of FIG. 4).

According to an embodiment, the outer circumferential wall 350 may include a first wall portion 351. The first wall portion 351 may face the window 330. The outer circumferential wall 350 may include a second wall portion 352. The second wall portion 352 may be spaced apart from the display 310. The first portion 343 of the support 340 may be disposed between the display 310 and the second wall portion 352. At least a portion of the second wall portion 352 may be formed to be inclined. The second wall portion 352 may include an inclined surface 3521. The inclined surface 3521 may be inclined in a direction toward the inside of the outer circumferential wall 350 with respect to the vertical direction. The outer surface 3431 of the first portion 343 may face the inclined surface 3521 of the outer circumferential wall 350. The inclination angle θ1 of the inclined surface 3521 and the inclination angle θ2 of the outer surface 3431 may be substantially the same. The outer circumferential wall 350 may include a third wall portion 353. The third wall portion 353 may face a portion of the supporting member 360. The second wall portion 352 may be positioned between the first wall portion 351 and the third wall portion 353. The outer circumferential wall 350 may include a fourth wall portion 354. The fourth wall portion 354 may face a portion of the supporting member 360. The third wall portion 353 may be positioned between the second wall portion 352 and the fourth wall portion 354. The thickness of the third wall portion 353 may be larger than the thickness of the fourth wall portion 354.

According to an embodiment, the supporting member 360 may include a supporting core 361. The supporting core 361 may face the support 340. At least a portion of the supporting core 361 may be spaced apart from the second portion 344 of the support 340. The supporting member 360 may include a supporting wall 362. The supporting wall 362 may protrude from the supporting core 361 toward the support 340. The second portion 344 may be seated on the supporting wall 362. The supporting member 360 may include a stopper portion 363. The stopper portion 363 may protrude from the supporting core 361 toward the outer circumferential wall 350. The stopper portion 363 may be stuck to a step formed between the third portion 353 and the fourth portion 354 of the outer circumferential wall 350.

According to an embodiment, the display assembly 300 may include an adhesive member 370. The adhesive member 370 may be disposed between the second portion 344 of the support 340 and the supporting member 360. The adhesive member 370 may couple the support 340 and the supporting member 360.

By the structure of the support 340, the outer circumferential wall 350, and the supporting member 360 according to an embodiment of the disclosure, the rigidity of the display assembly 300 may be enhanced and the display 310 and the support 340 may be stably supported. For example, as the first and second portions 343 and 344 of the support 340 are disposed between the outer circumferential wall 350 and the supporting member 360, the display 310 may be stably supported with respect to a counterpart (e.g., the outer circumferential wall 350 and the supporting member 360). For example, as the outer circumferential wall 350 has an inclined surface 3521, the rigidity of the outer circumferential wall 350 may be secured. For example, by the structure of the supporting wall 362 and the adhesive member 370 of the supporting member 360, the support 340 may be stably seated on the supporting member 360.

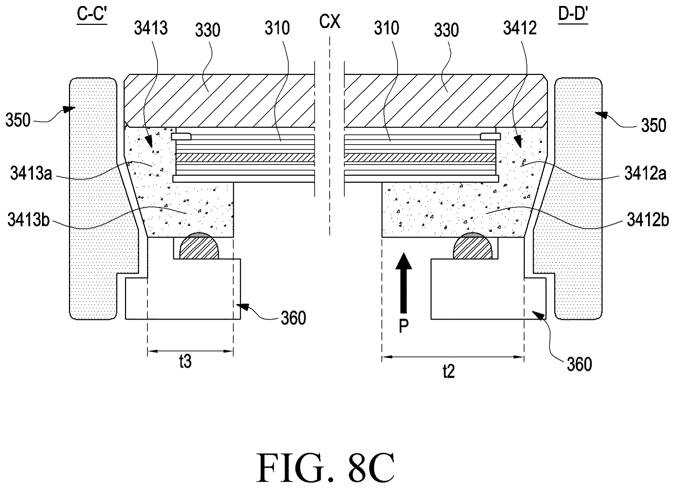

FIG. 8B is a cross-sectional view of the display assembly 300 taken along line B-B' of FIGS. 2 and 7. Some or all of the components described with reference to FIG. 8B may be the same as those described with reference to FIGS. 1 to 8A. Some or all of the components described with reference to FIG. 8B may be the same as those described with reference to FIGS. 8C to 16.

According to an embodiment, the support 340 may have an annular shape extending along the circumferential direction of the display 310, and at least a portion of the support 340 may protrude radially inward of the display 310. As illustrated in FIG. 7, the support 340 may include a body portion 341 and an injection portion 342.

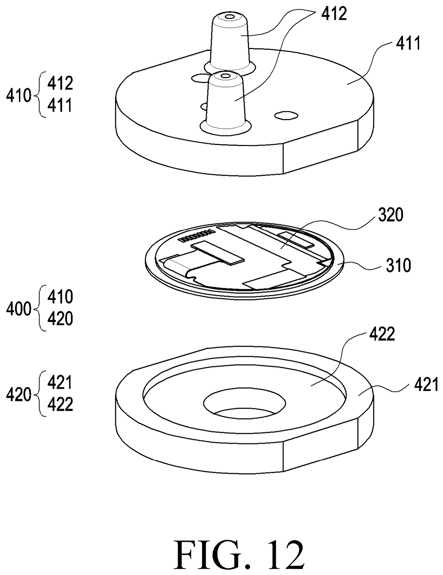

According to an embodiment, the support 340 may include a protrusion 345. The protrusion 345 may protrude radially inward of the display 310 from the second portion 344. The support 340 may include a boss 3451. The boss 3451 may protrude from the protrusion 345 away from the display 310 . The boss 3451 may be a portion into which a molding material is introduced through the injection port 412 of the mold frame 410 illustrated in FIG. 12.

According to an embodiment, the protrusion 345 and the boss 3451 of the support 340 may be spaced apart from the supporting member 360. The supporting member 360 may include an inner surface 3611. The protrusion 345 may protrude radially inward of the display assembly 300 rather than the inner surface 3611 of the supporting member 360. The boss 3451 may be positioned radially inside the display assembly 300 rather than the inner surface 3611 of the supporting member 360. A gap D may be formed between the boss 3451 and the inner surface 3611 of the supporting member 360.

Due to the above-described structure, the display assembly 300 according to an embodiment of the disclosure may easily mold the support 340 and may avoid interference between the support 340 and other structures. For example, by forming the injection portion 342 protruding radially inward in the body portion 341 extending along the circumference of the display 310, interference with other structures (e.g., the outer circumferential wall 350 and the supporting member 360) may be avoided.

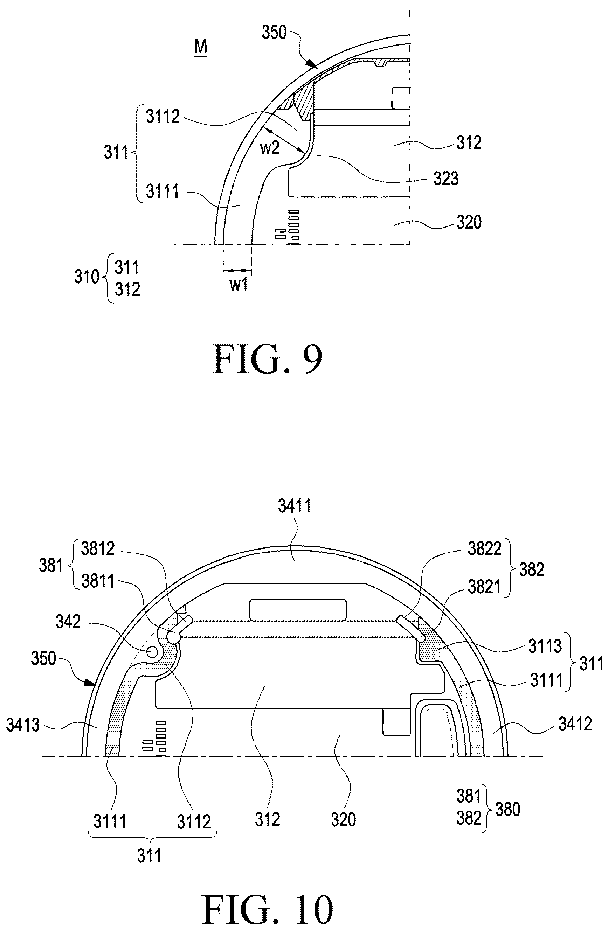

FIG. 8C is a cross-sectional view of the display assembly 300 taken along line C-C' and line D-D' illustrated in FIGS. 2 and 7. Some or all of the components described with reference to FIG. 8C may be the same as those described with reference to FIGS. 1 to 8B. Some or all of the components described with reference to FIG. 8C may be the same as those described with reference to FIGS. 9 to 16.

According to an embodiment, the thickness of the support 340 may vary depending on the position with respect to the central axis CX. For example, the thickness t2 of the second body portion 3412 may be larger than the thickness t3 of the third body portion 3413.

According to an embodiment, the support 340 may include a second body portion 3412 positioned on one side of the central axis CX and a third body portion 3413 positioned on the other side of the central axis CX. The second body portion 3412 may include a first portion 3412a and a second portion 3412b. The third body portion 3413 may include a first portion 3413a and a second portion 3413b. The description of the first and second portions 343 and 344 made with reference to FIG. 8A may be identically applied to the description of the first and second portions 3412a, 3412b, 3413a, and 3413b. The second portion 3412b of the second body portion 3412 may have a thickness t2 in the radial direction of the display 310. The second portion 3413b of the third body portion 3413 may have a thickness t3 in the radial direction of the display 310. The thickness t2 of the second portion 3412b of the second body portion 3412 may be larger than the thickness t3 of the second portion 3413b of the third body portion 3413.

The display assembly 300 according to an embodiment of the disclosure may be easily dismantled by the above-described structure. For example, the user may easily separate the display 310 and the support 340 from the display assembly 300 by pushing the second body portion 3412, which has a thickness larger than that of the third body portion 3413, in one direction (e.g., the P direction).

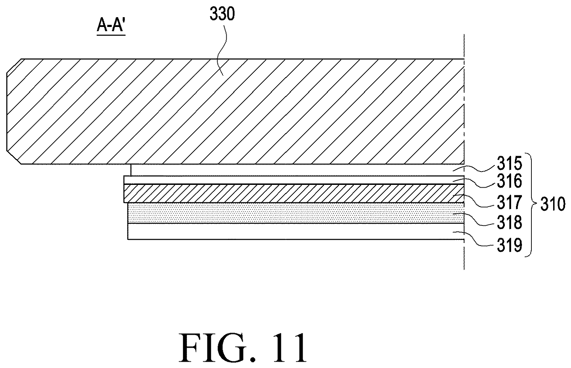

FIG. 9 is an enlarged view of area M of FIG. 7 with the support 340 removed. FIG. 10 is an enlarged view illustrating a partial area of the display assembly 300 of FIG. 7. Some or all of the components described with reference to FIGS. 9 and 10 may be the same as those described with reference to FIGS. 1 to 8C. The components described with reference to FIGS. 9 and 10 may be identical in whole or part to the components described with reference to FIGS. 11 to 16.

According to an embodiment, the display 310 may include a panel 311 and a bending portion 312. The panel 311 may be connected to the circuit board 320. The edge 3111 of the panel 311 may be positioned between the outer circumferential wall 350 and the circuit board 320. The panel 311 may include an edge 3111. The edge 3111 of the panel 311 may be a portion of the display 310 extending along the circumference of the display 310. The edge 3111 may be exposed between the circuit board 320 and the window 350 before molding the support 340.

According to an embodiment, the display 310 may include a panel protrusion 3112. The panel protrusion 3112 may protrude from the edge 3111 toward the circuit board 320. The circuit board 323 may include a groove 323. The panel protrusion 3112 may protrude toward the groove 323. The width w2 of the panel protrusion 3112 may be larger than the width w1 of the edge 3111. Referring to FIG. 7, the body portion 341 may correspond to the edge 3111, and the injection portion 342 may correspond to the panel protrusion 3112.

The display assembly 300 according to an embodiment of the disclosure may secure sufficient widths w1 and w2 of the edge 3111 of the display 310 and the panel protrusion 3112, thereby securing a sufficient space in which the mold frames 410 and 420 illustrated in FIG. 12 may be seated.

According to an embodiment, after the support 340 of FIG. 8A is disposed, the edge 3111 and a portion of the panel protrusion 3112 may be exposed between the support 340 and the circuit board 320. The edge 3111 may be partially exposed between the first body portion 3411 and the second body portion 3412, and may be partially exposed between the first body portion 3411 and the third body portion 3413. The injection portion 342 may protrude toward the panel protrusion 3112. The injection portion 342 may be formed between the first body portion 3411 and the third body portion 3413. The display 310 may include an extension 3113 positioned between the first body portion 3411 and the second body portion 3412. The extension 3113 may have a width larger than that of the edge 3111. The extension 3113 may be positioned between the edge 3111 and the bending portion 312.

According to an embodiment, the display assembly 300 may include a cushioning member 380. The cushioning member 380 may include a first cushioning member 381 disposed on one side of the bending portion 312 and a second cushioning member 382 disposed on the other side of the bending portion 312. The bending portion 312 may be positioned between the first cushioning member 381 and the second cushioning member 382.

According to an embodiment, a step may be formed between the edge 311 of the display 310 and the bending portion 312, and the cushioning member 380 may be disposed on the step. The first cushioning member 381 may be disposed on the step formed between the panel protrusion 3112 and the bending portion 312. The first cushioning member 381 may include a 1-1th cushioning portion 3811 corresponding to the panel protrusion 3112 and a 1-2th cushioning portion 3812 corresponding to the bending portion 312. The second cushioning member 382 may be disposed on the step formed between the extension 3113 and the bending portion 312. The second cushioning member 382 may include a 2-1th cushioning portion 3821 corresponding to the extension 3113 and a 2-2th cushioning portion 3822 corresponding to the bending portion 312.

By disposing the cushioning member 380 on the stepped portion of the display 310, the display assembly 300 according to an embodiment of the disclosure may prevent the molding material of the support 340 from leaking to the stepped portion, and may stably support the mold frames 410 and 420 illustrated in FIG. 12 to support coupling/forming between the display 310 and the support 340. For example, the cushioning member 380 may support the mold frames 410 and 420 of FIG. 12, and may seal leakage of the resin molding material injected through the mold frames 410 and 420.

FIG. 11 is a view illustrating only some components by cutting the display assembly 300 along line A-A' illustrated in FIGS. 2 and 7. The components described with reference to FIG. 11 may be identical in whole or part to the components described with reference to FIGS. 1 to 10. The components described with reference to FIG. 11 may be identical in whole or part to the components described with reference to FIGS. 12 to 16.

According to an embodiment, the display 310 may be formed by stacking a plurality of layers. The display 310 may include an adhesive layer 315, a polymer layer 316, a panel layer 317, a cushioning layer 318, and a film layer 319. The adhesive layer 315 may couple the display 310 to the window 330. The polymer layer 316 may be disposed between the adhesive layer 315 and the panel layer 317. The panel layer 317 may output a screen to the outside of the window 330. The cushioning layer 318 may be disposed between the panel layer 317 and the film layer 319. The film layer 319 may include an adhesive material. The film layer 319 may be disposed between the cushioning layer 318 and the support (e.g., the support 340 of FIG. 8A). The film layer 319 may couple the display 310 to the support 340.

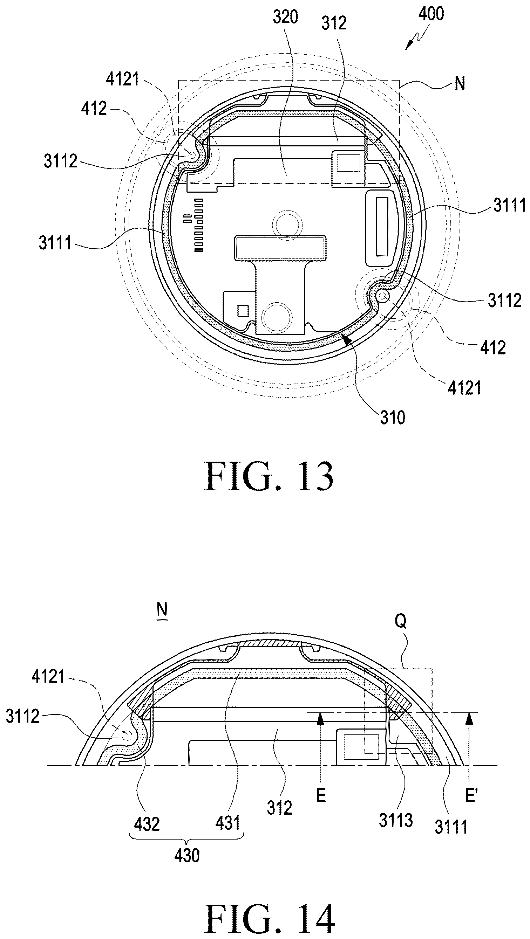

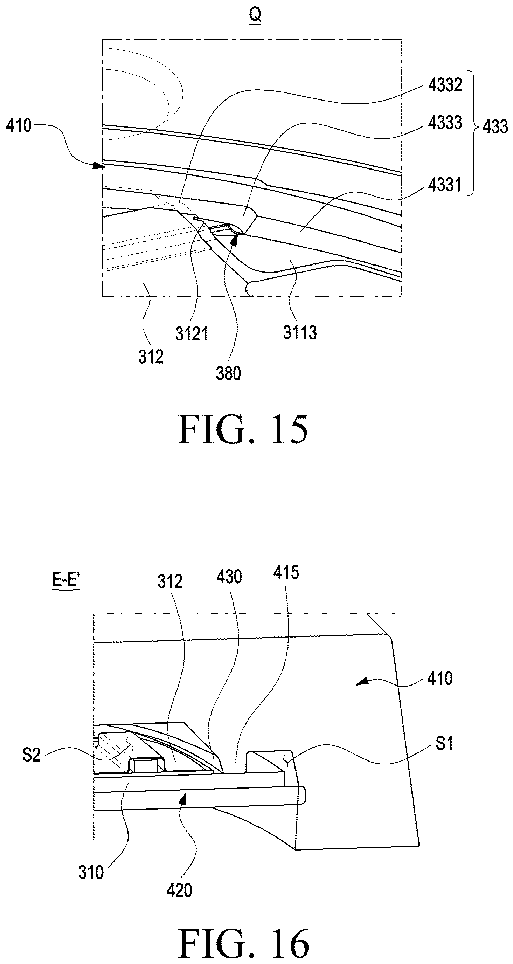

FIGS. 12 to 16 are views illustrating a process of manufacturing a display assembly 300 according to an embodiment of the disclosure. FIG. 12 is a view illustrating the assembly of the display 310 and the circuit board 320 separated from the mold frames 410 and 420. FIG. 13 is a perspective view illustrating a state in which the assembly is disposed in the mold frames 410 and 420. FIG. 14 is an enlarged view of area N of FIG. 13. FIG. 15 is an enlarged view of area Q of FIG. 14. FIG. 16 is a cross-sectional perspective view taken along line E-E' of FIG. 14. Some or all of the components described with reference to FIGS. 12 to 16 may be the same as the components described with reference to FIGS. 1 to 11.

Referring to FIG. 12, the display 310 to which the circuit board 320 is coupled may be inserted into the mold frame 400. The mold frame 400 may include a first mold frame 410 and a second mold frame 420. The first mold frame 410 and the second mold frame 420 may be coupled to each other to form a space in which the display 310 is disposed. The first mold frame 410 may include a first body 411 and an injection port 412. The injection port 412 may protrude from the first body 411. The second mold frame 412 may include a second body 421 and a plate 422. The display 310 to which the circuit board 320 is coupled may be disposed between the first body 411 and the second body 412, and may be seated on the plate 422. A molding material (e.g., resin) injected through the injection port 412 may be molded on at least a portion of the display 310. The molding material (e.g., resin) may be referred to as a "molding liquid". The molding may be referred to as "mold" or "molding". The type of molding may be molding.

Referring to FIG. 13, the injection port 412 may include an injection inlet 4121. The molding material injected through the injection inlet 4121 may be molded along the edge 3111 of the display 310. The panel protrusion 3112 may be disposed at a position corresponding to the injection inlet 4121.

Referring to FIG. 14, the mold frame 400 may include a sealing member 430. The sealing member 430 may extend in a circumferential direction of the mold frame 400. The sealing member 430 may prevent the molding material injected through the injection inlet 4121 from leaking toward the circuit board 320. The sealing member 430 may be seated on the edge 3111 of the display 310 and may be positioned between the support 340 and the circuit board 320. The support 340 may be formed on the radially outer side of the sealing member 430. The sealing member 430 may extend along the edge 3111, the panel protrusion 3112, and the extension 3113 of the display 310. The sealing member 430 may include a first sealing portion 431 and a second sealing portion 432. The first sealing portion 431 may be a portion of the sealing member 430 corresponding to the edge 3111 of the display 310. The second sealing portion 432 may be a portion of the sealing member 430 corresponding to the panel protrusion 3112 of the display 310.

Referring to FIG. 15, a stepped portion 3121 may be formed between the extension 3113 of the display 310 and the bending portion 312. The cushioning member 380 may be disposed on the stepped portion 3121, and may be formed by bending at least a portion thereof. The cushioning member 380 may be disposed between the sealing member 430 and the stepped portion 3121. The sealing member 430 may be disposed between the first mold frame 410 and the display 310. The sealing member 430 may include a third sealing portion 433. The third sealing portion 433 may be a portion of the sealing member 430 corresponding to the extension 3113. The third sealing portion 433 may include a 3-1th sealing portion 4331, a 3-2th sealing portion 4332, and a 3-3th sealing portion 4333. The 3-1th sealing portion 4331 may be disposed between the extension 3113 and the first mold frame 410. The 3-2th sealing portion 4332 may be disposed between the bending portion 312 and the first mold frame 410. The 3-3th sealing portion 4333 may be disposed between the cushioning member 380 and the first mold frame 410, and may connect the 3-1th sealing portion 4331 and the 3-2th sealing portion 4332.

Referring to FIG. 16, the first mold frame 410 may include a partition wall 415. The sealing member 430 may be disposed between the partition wall 415 and the display 310. The display 310 may be disposed between the first mold frame 410 and the second mold frame 420, and may contact the sealing member 430 disposed on the partition wall 415. A molding space S1 and a shielding space S2 may be formed between the first mold frame 410 and the second mold frame 420. The partition wall 415 may divide the molding space S1 and the shielding space S2. The sealing member 430 may prevent the molding material from leaking from the molding space S1 to the shielding space S2. The injection port (e.g., the injection port 412 of FIG. 12) of the mold frame (e.g., the mold frame 400 of FIG. 12) may be formed at a position corresponding to the molding space S1. The molding material (e.g., resin) may be injected into the molding space S1 to form a support (e.g., the support 340 of FIG. 7) on a portion of the display 310.

The wearable electronic device may include a display and a bezel portion surrounding the display. A component for supporting the display may be disposed between the display and the bezel portion, and as the component is disposed, the area occupied by the display in the wearable electronic device may be limited.

An object of the disclosure may be to expand the area occupied by the display.

An object of the disclosure may be to stably support the display.

The disclosure is not limited to the foregoing embodiments but various modifications or changes may rather be made thereto without departing from the spirit and scope of the disclosure.

An electronic device according to various embodiments of the disclosure may expand the area occupied by a display by disposing a supporting member on a lower side of the display and injection-molding a support between the display and an outer circumferential wall.

An electronic device according to various embodiments of the disclosure may stably support a display by disposing a support in a space between the display and an outer circumferential wall and a space between the display and a supporting member.

Effects of the disclosure are not limited to the foregoing, and other unmentioned effects would be apparent to one of ordinary skill in the art from the following description.

A wearable electronic device (e.g., 200 of FIGS. 1 to 16) according to an embodiment of the disclosure may include an outer circumferential wall (e.g., 350 of FIGS. 1 to 16) forming an inner space.

A wearable electronic device (e.g., 200 of FIGS. 1 to 16) according to an embodiment of the disclosure may include a supporting member (e.g., 360 of FIGS. 1 to 16) disposed inside the outer circumferential wall (e.g., 350 of FIGS. 1 to 16).

A wearable electronic device (e.g., 200 of FIGS. 1 to 16) according to an embodiment of the disclosure may include a window (e.g., 330 of FIGS. 1 to 16) spaced apart from an upper side of the supporting member (e.g., 360 of FIGS. 1 to 16).

A wearable electronic device (e.g., 200 of FIGS. 1 to 16) according to an embodiment of the disclosure may include a display (e.g., 310 of FIGS. 1 to 16) disposed between the supporting member (e.g., 360 of FIGS. 1 to 16) and the window (e.g., 330 of FIGS. 1 to 16) and spaced apart from the outer circumferential wall (e.g., 350 of FIGS. 1 to 16).

A wearable electronic device (e.g., 200 of FIGS. 1 to 16) according to an embodiment of the disclosure may include a support (e.g., 340 of FIGS. 1 to 16) including a first portion (e.g., 343 of FIGS. 1 to 16) positioned between the display (e.g., 310 of FIGS. 1 to 16) and the outer circumferential wall (e.g., 350 of FIGS. 1 to 16) and a second portion (e.g., 344 of FIGS. 1 to 16) positioned between the display (e.g., 310 of FIGS. 1 to 16) and the supporting member (e.g., 360 of FIGS. 1 to 16) and extending from the first portion (e.g., 343 of FIGS. 1 to 16).

A display (e.g., 310 of FIGS. 1 to 16) according to an embodiment of the disclosure may include a panel (e.g., 311 of FIGS. 1 to 16) configured to output a screen.

A display (e.g., 310 of FIGS. 1 to 16) according to an embodiment of the disclosure may include a bending portion (e.g., 312 of FIGS. 1 to 16) bent and extended from the panel (e.g., 311 of FIGS. 1 to 16).

A support (e.g., 340 of FIGS. 1 to 16) according to an embodiment of the disclosure may be disposed to surround the bending portion (e.g., 312 of FIGS. 1 to 16).

A support (e.g., 340 of FIGS. 1 to 16) according to an embodiment of the disclosure may include a supporting body (e.g., 341 of FIGS. 1 to 16) extending along a circumference of the display (e.g., 310 of FIGS. 1 to 16).

A support (e.g., 340 of FIGS. 1 to 16) according to an embodiment of the disclosure may include an injection portion (e.g., 342 of FIGS. 1 to 16) protruding from the supporting body (e.g., 341 of FIGS. 1 to 16) toward the display (e.g., 310 of FIGS. 1 to 16).

A support (e.g., 340 of FIGS. 1 to 16) according to an embodiment of the disclosure may include a plurality of injection portions (e.g., 342 of FIGS. 1 to 16) spaced apart from each other along a circumference of the display (e.g., 310 of FIGS. 1 to 16).

A wearable electronic device (e.g., 200 of FIGS. 1 to 16) according to an embodiment of the disclosure may include a circuit board (e.g., 320 of FIGS. 1 to 16) connected to the display (e.g., 310 of FIGS. 1 to 16).

A display (e.g., 310 of FIGS. 1 to 16) according to an embodiment of the disclosure may include an edge (e.g., 3111 of FIGS. 1 to 16) coupled to the support (e.g., 340 of FIGS. 1 to 16).

A display (e.g., 310 of FIGS. 1 to 16) according to an embodiment of the disclosure may include a panel protrusion (e.g., 3112 of FIGS. 1 to 16) protruding from the edge (e.g., 3111 of FIGS. 1 to 16) toward the circuit board (e.g., 320 of FIGS. 1 to 16).

The outer circumferential wall (e.g., 350 of FIGS. 1 to 16) according to an embodiment of the disclosure may include an inclined surface (e.g., 3521 of FIGS. 1 to 16) extending toward the support (e.g., 340 of FIGS. 1 to 16).

A supporting member (e.g., 360 of FIGS. 1 to 16) according to an embodiment of the disclosure may include a supporting wall (e.g., 362 of FIGS. 1 to 16) protruding toward the support (e.g., 340 of FIGS. 1 to 16).

A wearable electronic device (e.g., 200 of FIGS. 1 to 16) according to an embodiment of the disclosure may include an adhesive member (e.g., 370 of FIGS. 1 to 16) disposed between the supporting member (e.g., 360 of FIGS. 1 to 16) and the support (e.g., 340 of FIGS. 1 to 16) and coupling the supporting member (e.g., 360 of FIGS. 1 to 16) and the support (e.g., 340 of FIGS. 1 to 16).

A support (e.g., 340 of FIGS. 1 to 16) according to an embodiment of the disclosure may include a first body portion (e.g., 3411 of FIGS. 1 to 16) facing a bending portion (e.g., 312 of FIGS. 1 to 16) of the display (e.g., 310 of FIGS. 1 to 16).

A support (e.g., 340 of FIGS. 1 to 16) according to an embodiment of the disclosure may include a second body portion (e.g., 3412 of FIGS. 1 to 16) spaced apart from the first body portion (e.g., 3411 of FIGS. 1 to 16) in a circumferential direction of the display (e.g., 310 of FIGS. 1 to 16).

A support (e.g., 340 of FIGS. 1 to 16) according to an embodiment of the disclosure may include a third body portion (e.g., 3413 of FIGS. 1 to 16) spaced apart from the first body portion (e.g., 3411 of FIGS. 1 to 16) and the second body portion (e.g., 3412 of FIGS. 1 to 16) in a circumferential direction of the display (e.g., 310 of FIGS. 1 to 16) and having a thickness smaller than a thickness of the second body portion (e.g., 3412 of FIGS. 1 to 16).

A thickness of the first body portion (e.g., 3411 of FIGS. 1 to 16) according to an embodiment of the disclosure may be larger than a thickness of the second body portion (e.g., 3412 of FIGS. 1 to 16) and a thickness of the third body portion (e.g., 3413 of FIGS. 1 to 16).

A wearable electronic device (e.g., 200 of FIGS. 1 to 16) according to an embodiment of the disclosure may include a cushioning member (e.g., 380 of FIGS. 1 to 16) disposed on a stepped portion formed between the display (e.g., 310 of FIGS. 1 to 16) and the circuit board (e.g., 320 of FIGS. 1 to 16).

A display (e.g., 310 of FIGS. 1 to 16) according to an embodiment of the disclosure may include an edge (e.g., 3111 of FIGS. 1 to 16) coupled to the support (e.g., 340 of FIGS. 1 to 16).

A display (e.g., 310 of FIGS. 1 to 16) according to an embodiment of the disclosure may include a panel protrusion (e.g., 3112 of FIGS. 1 to 16) protruding from the edge (e.g., 3111 of FIGS. 1 to 16) toward the circuit board.

A display (e.g., 310 of FIGS. 1 to 16) according to an embodiment of the disclosure may include an extension (e.g., 3113 of FIGS. 1 to 16) spaced apart from the panel protrusion (e.g., 3112 of FIGS. 1 to 16) in a circumferential direction of the display (e.g., 310 of FIGS. 1 to 16).

A cushioning member (e.g., 380 of FIGS. 1 to 16) according to an embodiment of the disclosure may include a first cushioning member (e.g., 381 of FIGS. 1 to 16) disposed between the panel protrusion (e.g., 3112 of FIGS. 1 to 16) and the circuit board (e.g., 320 of FIGS. 1 to 16).

A cushioning member (e.g., 380 of FIGS. 1 to 16) according to an embodiment of the disclosure may include a second cushioning member (e.g., 382 of FIGS. 1 to 16) disposed between the extension (e.g., 3113 of FIGS. 1 to 16) and the circuit board (e.g., 320 of FIGS. 1 to 16).

The extension (e.g., 3113 of FIGS. 1 to 16) according to an embodiment of the disclosure may be formed at a position where the circuit board (e.g., 320 of FIGS. 1 to 16) and the bending portion (e.g., 312 of FIGS. 1 to 16) are connected.

A display (e.g., 310 of FIGS. 1 to 16) according to an embodiment of the disclosure may include a film layer 319 coupled to the support (e.g., 340 of FIGS. 1 to 16).

A support (e.g., 340 of FIGS. 1 to 16) according to an embodiment of the disclosure may be an injection-molded article including a molding material injected toward the display (e.g., 310 of FIGS. 1 to 16).

A wearable electronic device (e.g., 200 of FIGS. 1 to 16) according to an embodiment of the disclosure may include a display (e.g., 310 of FIGS. 1 to 16) configured to output a screen.

A wearable electronic device (e.g., 200 of FIGS. 1 to 16) according to an embodiment of the disclosure may include an outer circumferential wall (e.g., 350 of FIGS. 1 to 16) spaced apart from the display (e.g., 310 of FIGS. 1 to 16) and surrounding the display (e.g., 310 of FIGS. 1 to 16).

A wearable electronic device (e.g., 200 of FIGS. 1 to 16) according to an embodiment of the disclosure may include a supporting member (e.g., 360 of FIGS. 1 to 16) spaced apart in a direction crossing a direction in which the display (e.g., 310 of FIGS. 1 to 16) and the outer circumferential wall (e.g., 350 of FIGS. 1 to 16) are spaced apart from each other.

A wearable electronic device (e.g., 200 of FIGS. 1 to 16) according to an embodiment of the disclosure may include a support (e.g., 340 of FIGS. 1 to 16) including a first portion (e.g., 343 of FIGS. 1 to 16) positioned between the display (e.g., 310 of FIGS. 1 to 16) and the outer circumferential wall (e.g., 350 of FIGS. 1 to 16) and a second portion (e.g., 344 of FIGS. 1 to 16) positioned between the display (e.g., 310 of FIGS. 1 to 16) and the supporting member (e.g., 360 of FIGS. 1 to 16).

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. A wearable electronic device (101; 200) comprising:
an outer circumferential wall (350);
a supporting member (360) inside the outer circumferential wall (350);
a window (330) spaced apart from an upper side of the supporting member (360);
a display (310) spaced apart from the outer circumferential wall (350) and between the supporting member (360) and the window (330); and
a support (340) comprising:
a first portion (343) between the display (310) and the outer circumferential wall (350); and
a second portion (344) between the display (310) and the supporting member (360), the second portion (344) extending from the first portion (343).

2. The wearable electronic device of claim 1, wherein the display (310) comprises:
a panel (311) configured to output content that is visible outside the wearable electronic device; and
a bendable portion (312) extending from the panel (311), and
wherein the support (340) is provided around the bendable portion (312).

3. The wearable electronic device of claim 1 or 2, wherein the support (340) comprises:
a body portion (341) extending along a circumference of the display (310); and
an injection portion (342) protruding from the body portion (341) toward the display (310).

4. The wearable electronic device of any one of claims 1 to 3, wherein the support (340) comprises a plurality of injection portions (342) spaced apart from each other along a circumferential direction of the display (310).

5. The wearable electronic device of any one of claims 1 to 4, further comprising a printed circuit board (PCB) (320) connected to the display (310),
wherein the support is coupled to an edge of the display, and
wherein the display (310) comprises a panel protrusion (3112) protruding from the edge (3111) of the display toward the PCB (320).

6. The wearable electronic device of any one of claims 1 to 5, wherein the outer circumferential wall (350) comprises an inclined surface (3521) extending toward the support (340).

7. The wearable electronic device of any one of claims 1 to 6, wherein the supporting member (360) comprises a supporting wall (362) protruding toward the support (340).

8. The wearable electronic device of any one of claims 1 to 7, further comprising an adhesive member (370) between the supporting member (360) and the support (340), the adhesive member (370) connecting the supporting member (360) and the support (340).

9. The wearable electronic device of any one of claims 1 to 8, wherein the display comprises a bendable portion,
wherein the support (340) further comprises:
a first body portion (3411) facing the bendable portion (312) of the display (310);
a second body portion (3412) spaced apart from the first body portion (3411) along a circumferential direction of the display (310); and
a third body portion spaced apart from the first body portion (3411) and the second body portion (3412) along the circumferential direction of the display (310), and
wherein a thickness of the third body portion is smaller than a thickness of the second body portion.

10. The wearable electronic device of claim 9, wherein a thickness of the first body portion (3411) is larger than the thickness of the second body portion (3412) and the thickness of the third body portion (3413).

11. The wearable electronic device of any one of claims 1 to 10, further comprising:
a printed circuit board (PCB)(320) connected to the display (310);
a stepped portion between the display and the PCB; and
at least one cushioning member (330) on the stepped portion.

12. The wearable electronic device of claim 11, wherein the display (310) comprises:
an edge (3111) coupled to the support (340);
a panel protrusion (3112) protruding from the edge (3111) toward the PCB (320); and
an extension (3113) spaced apart from the panel protrusion (3112) in a circumferential direction of the display (310), and
wherein the at least one cushioning member (380) comprises:
a first cushioning member (3112) between the panel protrusion (3112) and the PCB (320); and
a second cushioning member (382) between the extension (3113) and the PCB (320).

13. The wearable electronic device of claim 11 or 12, wherein the display (310) further comprises a bendable portion (312) connected to the PCB (320), and
wherein the extension (3113) is at position where the PCB (320) and the bendable portion (312) are connected.

14. The wearable electronic device of any one of claims 1 to 13, wherein the display (310) comprises a film layer (319) coupled to the support (340).

15. A wearable electronic device comprising:
a display;
an outer circumferential wall at least partially surrounding the display;
a supporting member spaced apart from the display; and
a support coupled to an edge of the display, the support comprising:
a first portion between the display and the outer circumferential wall; and
a second portion between the display and the supporting member.
